(19) **Europäisches Patentamt / European Patent Office / Office européen des brevets**

(11) **EP 4 442 458 A1**

(12) **EUROPEAN PATENT APPLICATION**
published in accordance with Art. 153(4) EPC

(43) Date of publication:
**09.10.2024 Bulletin 2024/41**

(21) Application number: **22901392.5**

(22) Date of filing: **01.12.2022**

(51) International Patent Classification (IPC):
**B32B 27/00** (2006.01)    **B32B 27/32** (2006.01)

(52) Cooperative Patent Classification (CPC):
**B32B 27/00; B32B 27/32**

(86) International application number:
**PCT/JP2022/044305**

(87) International publication number:
**WO 2023/100961 (08.06.2023 Gazette 2023/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.12.2021 JP 2021195544**

(71) Applicant: **Dai Nippon Printing Co., Ltd.**
**Tokyo 162-8001 (JP)**

(72) Inventors:
• **OGASAWARA, Takeru**
**Tokyo 162-8001 (JP)**
• **OONO, Takaya**
**Tokyo 162-8001 (JP)**
• **MOMEN, Kazuki**
**Tokyo 162-8001 (JP)**
• **OGURA, Yoshimasa**
**Tokyo 162-8001 (JP)**
• **ISEMORI, Yuichi**
**Tokyo 162-8001 (JP)**

(74) Representative: **Müller-Boré & Partner**
**Patentanwälte PartG mbB**
**Friedenheimer Brücke 21**
**80639 München (DE)**

(54) **DECORATIVE SHEET OBTAINED USING BIOMASS-DERIVED POLYETHYLENE, AND DECORATIVE PLATE**

(57) The present disclosure provides decorative sheets prepared using biomass-derived polyethylene and capable of preventing or reducing the occurrence of voids in the picture pattern. Provided is a decorative sheet prepared using biomass-derived polyethylene, including: a substrate sheet that contains biomass-derived polyethylene and has a first face and a second face; a picture auxiliary layer for constituting a picture pattern, laminated on a first face side of the substrate sheet and entirely covering the first face of the substrate sheet; and a picture pattern layer for constituting the picture pattern, laminated on a side of the picture auxiliary layer opposite to a side with the substrate sheet, the substrate sheet having a biomass content of 15% or higher and 40% or lower and a thickness of 50 um or greater and smaller than 65 um.

EP 4 442 458 A1

**Description**

TECHNICAL FIELD

The present disclosure relates to decorative sheets prepared using biomass-derived polyethylene and decorative panels.

BACKGROUND ART

Decorative panels in which decorative sheets with design are attached are commonly used for decorating components used in building materials, furniture, home electrical appliances, or the like.

For example, Patent Literature 1 discloses a decorative sheet including, on a substrate sheet, at least a surface protective layer, the surface protective layer comprising a resin composition containing an ionizing radiation curable resin, an aldehyde absorbent, and a non-photocatalyst.

CITATION LIST

- Patent Literature

Patent Literature 1: JP 2013-63635 A

SUMMARY OF INVENTION

- Technical Problem

A substrate sheet in a decorative sheet used for building materials contains plastic as a main component. Petroleum-derived plastic is commonly used as such plastic; however, it is not favorable from the perspective of reducing environmental impact. As a material with less environmental impact than petroleum-derived plastic, biomass-derived plastic made from renewable biological resources is known.

The present inventors have intensively studied about the use of biomass-derived polyethylene films in decorative sheets for building materials, etc., and found that biomass-derived polyethylene films often contain more impurities than petroleum-derived polyethylene films, increasing likelihood of defects called "fisheyes" due to impurity contamination. Areas of the film where fisheyes are present disadvantageously have lower adhesiveness to resin as compared with the other areas with no fisheyes.

The present inventors found an issue that, when a biomass-derived polyethylene film is used as a substrate for a decorative sheet, the presence of fisheyes may adversely affect the coloration of a picture pattern formed in layers such as a picture layer, resulting in voids. This leads to a defective appearance of the decorative sheet, rendering it unable to fulfill its intended role. In order to reduce environmental impact, a biomass-derived polyethylene film used is preferably thin (a thickness of less than 65 um). However, the present inventors also found out an issue that a thinner biomass-derived polyethylene film more noticeably suffers fisheyes described above.

The picture pattern layer for forming various picture patterns needs to arrange colors (coloring ink containing a colorant) partially and overlappingly, and there are overlap regions between edge regions of colored portions (areas where coloring ink is placed) and between colored portions (areas where coloring ink is placed). The occurrence of voids is particularly likely when such an overlap region overlaps with fisheyes exhibiting poor adhesiveness. Such a defect is highly noticeable in the picture pattern, greatly lowering the quality of the decorative sheet.

The present disclosure is intended to solve the above issues found in introducing biomass-derived polyethylene into decorative sheets for building materials and other applications.

- Solution to problem

By setting the biomass content and the thickness of a substrate sheet containing biomass-derived polyethylene each within a predetermined range, flexibility can be imparted to the substrate sheet. By laminating a picture auxiliary layer on one side of the substrate sheet to cover the entire surface, fisheyes of the substrate sheet can be repaired to prevent or reduce the occurrence of voids in the picture pattern formed by a picture pattern layer laminated on the picture auxiliary layer.

Durable consumer goods such as building materials, furniture, and home appliances should satisfy stricter requirements regarding appearance and durability than nondurable consumer goods (e.g., clothing, food, daily necessities) and packaging materials. Therefore, for appropriate use of a biomass-derived polyethylene film in a decorative sheet used for durable consumer goods, essentially used is a picture auxiliary layer which is not necessarily used when a conventional petroleum-derived polyethylene film is used for durable consumer goods or when a biomass-derived polyethylene film is used for nondurable consumer goods or packaging materials.

Specifically, the present disclosure relates to a decorative sheet prepared using biomass-derived polyethylene, including a substrate sheet that contains biomass-derived polyethylene and has a first face and a second face; a picture auxiliary layer for constituting a picture pattern, laminated on a first face side of the substrate sheet and entirely covering the first face of the substrate sheet; and a picture pattern layer for constituting the picture pattern, laminated on a side of the picture auxiliary layer opposite to a side with the substrate sheet; the substrate sheet having a biomass content of 15% or higher and 40% or lower and a thickness of 50 um or greater and smaller than 65 um.

In the decorative sheet prepared using biomass-derived polyethylene of the present disclosure, the substrate sheet preferably contains an antioxidant, more preferably contains a phenol antioxidant, still more preferably contains a phosphorus antioxidant.

The picture auxiliary layer preferably has a thickness of 1 um or greater and 5 um or smaller.

The picture auxiliary layer is preferably smoothed.

The decorative sheet preferably further includes a transparent resin layer laminated on a side of the picture pattern layer opposite to a side with the picture auxiliary layer, and the transparent resin layer preferably has a thickness of 40 um or greater and 100 um or smaller.

The transparent resin layer preferably contains an olefin resin.

The present disclosure also relates to a decorative panel including the decorative sheet prepared using biomass-derived polyethylene and an adherend laminated adjacent to a second face side of the substrate sheet in the decorative sheet.

- Advantageous Effects of Invention

The present disclosure can provide decorative sheets prepared using biomass-derived polyethylene and capable of preventing or reducing the occurrence of voids in the picture pattern.

BRIEF DESCRIPTION OF DRAWINGS

FIG. 1 is a cross-sectional view schematically illustrating a preferred example of a decorative sheet prepared using biomass-derived polyethylene of the present disclosure.
FIG. 2 is a cross-sectional view schematically illustrating a preferred example of a decorative sheet prepared using biomass-derived polyethylene of the present disclosure.

DESCRIPTION OF EMBODIMENTS

<Decorative sheet prepared using biomass-derived polyethylene>

Hereinbelow, a decorative sheet prepared using biomass-derived polyethylene is described.

The decorative sheet prepared using biomass-derived polyethylene of the present disclosure includes: a substrate sheet that contains biomass-derived polyethylene and has a first face and a second face; a picture auxiliary layer for constituting a picture pattern, laminated on a first face side of the substrate sheet and entirely covering the first face of the substrate sheet; and a picture pattern layer for constituting the picture pattern, laminated on a side of the picture auxiliary layer opposite to a side with the substrate sheet. The substrate sheet has a biomass content of 15% or higher and 40% or lower and a thickness of 50 um or greater and smaller than 65 um.

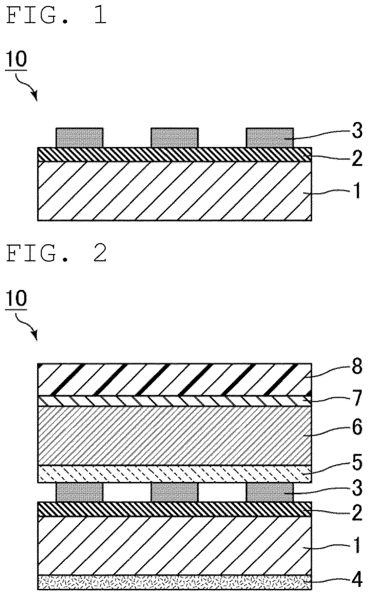

FIG. 1 is a cross-sectional view schematically illustrating a preferred example of a decorative sheet prepared using biomass-derived polyethylene of the present disclosure.

As illustrated in FIG. 1, a decorative sheet 10 includes a substrate sheet 1, and, on the first face side of the substrate sheet 1, a picture auxiliary layer 2 and a picture pattern layer 3.

FIG. 2 is a cross-sectional view schematically illustrating a preferred example of a decorative sheet prepared using biomass-derived polyethylene of the present disclosure. As illustrated in FIG. 2, the decorative sheet 10 may further include, in addition to the layers illustrated in FIG. 1, a back-side adhesion auxiliary layer 4 laminated on the second face side of the substrate sheet 1, and an adhesive layer 5, a transparent resin layer 6, a front-side adhesion auxiliary layer 7, and a surface protective layer 8 laminated in the stated order on the picture pattern layer 3.

(Substrate sheet)

The decorative sheet includes a substrate sheet that contains biomass-derived polyethylene and has a first face and a second face.

The first face refers to a side of the substrate sheet on which a picture pattern layer is to be formed (also referred to as a front side) and the second face refers to a side of the substrate sheet opposite to the first face (side on which an adherend is to be laminated, also referred to as a back side).

The term "biomass-derived polyethylene" refers to polyethylene prepared using biomass-derived raw materials at least in part and does not mean polyethylene whose raw materials are all biomass-derived.

Whether or not a biomass-derived raw material is used can be determined by radiocarbon (C14) measurement described later in "Biomass content".

The substrate sheet contains, for example, biomass polyethylene which is a polymer of a biomass-derived ethylene-containing monomer.

The substrate sheet has a biomass content of 15% or higher and 40% or lower.

Use of a substrate sheet with a biomass content of 15% or higher can suitably reduce the amount of fossil fuel-derived raw materials, thereby suitably reducing environmental impact.

In order to suitably reduce environmental impact, the biomass content of the substrate sheet is more preferably 20% or higher, still more preferably 25% or higher.

On the other hand, the higher the biomass content of the substrate sheet, the more noticeable the defects caused by fisheyes described above. When the substrate sheet has a biomass content of 40% or lower and a predetermined thickness (thickness that allows sufficient flexibility), the adverse effect by defects caused by fisheyes of the substrate sheet can be reduced, thereby preventing or reducing the occurrence of voids in the picture pattern. The substrate sheet preferably has a biomass content of 35% or lower.

The "biomass content" (concentration of biomass-derived carbon in the substrate sheet containing biomass-derived polyethylene) is a value obtained by measuring the amount of biomass-derived carbon by radiocarbon (C14) measurement. It is known that since carbon dioxide in the atmosphere contains a constant proportion (105.5 pMC) of C14, plants that grow by assimilating atmospheric carbon dioxide, such as corn, also have a C14 content of about 105.5 pMC. It is also known that fossil fuels hardly contain C14. Accordingly, the proportion of biomass-derived carbon can be calculated by measuring the proportion of C14 contained within all carbon atoms in polyethylene.

Specifically, the amount $P_{bio}$ of biomass-derived carbon when the C14 content of polyethylene is set to $P_{C14}$ can be determined using the following equation:

$$P_{bio} \ (\%) \ = \ P_{C14}/105.5 \ \times \ 100.$$

The substrate sheet can be prepared using at least one selected from the group consisting of high-density polyethylene, medium-density polyethylene, low-density polyethylene, and linear low-density polyethylene. The substrate sheet may be prepared using a mixture containing two or more selected from the group consisting of high-density polyethylene, medium-density polyethylene, low-density polyethylene, and linear low-density polyethylene.

The substrate sheet preferably contains an antioxidant.

Examples of antioxidants include phenol antioxidants, amine antioxidants, sulfur antioxidants, and phosphorus antioxidants.

In order to reduce fisheyes of the substrate sheet and prevent or reduce the occurrence of voids in the picture pattern or adhesion failure to adherends, preferred among these are phenol antioxidants. Phenol antioxidants, being resistant to hydrolysis, are preferred as antioxidants for use in substrate sheets of decorative sheets which require durability.

Examples of phenol antioxidants include hindered phenol antioxidants. Specific examples thereof include pentaerythritol tetrakis[3-(3,5-di-tert-butyl-4-hydroxyphenyl)propionate], octadecyl-3-(3,5-di-tert-butyl-4-hydroxyphenyl)propionate, thiodiethylenebis[3-(3,5-di-tert-butyl-4-hydroxyphenyl)propionate], N,N'-hexane-1,6-diylbis[3-(3,5-di-tert-butyl-4-hydroxyphenylpropionamide)], 2,4-dimethyl-6-(1-methylpentadecyl)phenol, diethyl[[3,5-bis(1,1-dimethylethyl)-4-hydroxyphenyl]methyl]phosphoate, 3,3',3",5,5',5"-hexa-tert-butyl-a,a',a"-(mesitylene-2,4,6-triyl)tri-p-cresol, 4,6-bis(octylthiomethyl)-o-cresol, ethylenebis(oxyethylene)bis[3-(5-tert-butyl-4-hydroxy-m-tolyl)propionate], hexamethylenebis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, 2,6-di-tert-butyl-4-(4,6-bis(octylthio)-1,3,5-triazin-2-ylamino)phenol, and 2-[1-(2-hydroxy-3,5-di-tert-pentylphenyl)ethyl]-4,6-di-tert-pentylphenyl acrylate.

The amount of the antioxidant is preferably 0.01% by mass or more and 0.2% by mass or less based on the mass of the substrate sheet. Whether or not the substrate sheet contains an antioxidant can be determined by, for example liquid chromatography.

The substrate sheet containing a phenol antioxidant may discolor. In order to prevent or reduce such discoloration, use of a phenol antioxidant and a phosphorus antioxidant in combination is more preferred.

Examples of phosphorus antioxidants include triphenyl phosphite, tris(2,4-t-butylphenyl)phosphite, bis[2,4-bis(1,1-dimethylethyl)-6-methylphenyl]ethyl ester phosphite, bis(2,4-t-butylphenyl)pentaerythritol diphosphite, tetrakis(2,4-di-t-butylphenyl)[1,1-biphenyl]-4,4'-diylbisphosphonite, tetra(C12-C15 alkyl)-4,4'-isopropylidene diphenyl diphosphite, 3,9-bis(2,6-t-butyl-4-methylphenoxy)-2,4,8,10-tetraoxa-3,9-diphosphaspiro[5,5-undecane], and 1,1'-biphenyl-4,4'-diylbis[bis(2,4-di-t-butylphenyl)phosphonite].

In a combination use of a phenol antioxidant and a phosphorus antioxidant, the mass ratio of the phenol antioxidant and the phosphorus antioxidant (phenol antioxidant:phosphorus antioxidant) is preferably 1:1 or more and 1:2 or less. In such a case, defects caused by fisheyes of the substrate sheet can be suitably reduced and discoloration of the substrate sheet can be suitably prevented or reduced.

The substrate sheet may contain various additives such as colorants, fillers, matting agents, blowing agents, flame retardants, lubricants, antistatic agents, ultraviolet absorbers, or light stabilizers, if needed.

The amount of the additives is preferably 20% by mass or more and 40% by mass or less based on the mass of the substrate sheet.

The substrate sheet has a thickness of 50 um or greater and smaller than 65 um.

When the substrate sheet has a thickness of 50 um or greater, it is possible to sufficiently secure the proportion of biomass-derived raw material in the decorative sheet prepared using biomass-derived polyethylene, leading to suitable reduction of environmental impact. Shrinkage during formation of the picture pattern layer or the picture auxiliary layer can also be prevented or reduced. The substrate sheet preferably has a thickness of 55 um or greater.

When the substrate sheet has a thickness of smaller than 65 um, the substrate sheet can have flexibility and the adverse effect by defects caused by fisheyes of the substrate sheet can be reduced, thereby preventing or reducing the occurrence of voids in the picture pattern of the picture pattern layer.

Moreover, when the substrate sheet has a thickness of smaller than 65 um, the amount of fossil fuel-derived raw material used in the substrate sheet can be reduced, thereby reducing environmental impact. The substrate sheet preferably has a thickness of 60 um or smaller.

The substrate sheet may be sheeted by any specific method. Examples thereof include a T-die method in which molten resin is extruded and laminated using a T-die, a calendering method, and circular die methods (inflation method, tubular method). In order to improve the production efficiency (production speed) and relieve the internal stress during sheeting, preferred among these is a T-die method. In order to achieve the uniform thickness of the substrate sheet or reduce contamination defects, preferred is a calendering method.

(Picture auxiliary layer)

The decorative sheet includes a picture auxiliary layer laminated on the first face side of the substrate sheet and entirely covering the first face of the substrate sheet.

Owing to the presence of such a picture auxiliary layer, fisheyes on the first face side of the substrate sheet can be repaired, thereby preventing or reducing the occurrence of voids in the picture pattern of the picture pattern layer laminated on the picture auxiliary layer.

The picture auxiliary layer only needs to uniformly cover the entire first face and does not need to completely cover the whole surface of the first face. The picture auxiliary layer may have, for example, minute defects such as pinholes that are inevitably formed during formation of the picture auxiliary layer.

The picture auxiliary layer entirely covering the first face of the substrate sheet can be formed through solid printing by a gravure printing method using a gravure roll. The ink used in formation of the picture auxiliary layer contains a resin component and a liquid component. The ink may be prepared by appropriately mixing a colorant such as a pigment and a dye, an extender pigment, a stabilizer, a plasticizer, a catalyst, a curing agent, or the like.

Any resin component may be used. Usable is any one or a combination of two or more selected from urethane resins, acrylic resins, ester resins, amide resins, butyral resins, styrene resins, cellulose acetate resins, acrylic-urethane resins, vinyl chloride-vinyl acetate copolymer resins, vinyl chloride-vinyl acetate-acrylic copolymer resins, and chlorinated polypropylene resins. An organic solvent such as methyl ethyl ketone, toluene, cyclohexanone, an ethyl acetate-alcohol mixture, ethanol, or methanol, or water is usable as the liquid component.

The picture auxiliary layer is preferably smoothed using a smoothing roll after solid printing using a gravure roll. Alternatively, the picture auxiliary layer is preferably smoothed by setting the conveying speed of the substrate sheet and the circumferential rotational speed of the gravure roll at different speeds. The smoothing enables formation of more homogeneous picture auxiliary layer.

The picture auxiliary layer preferably has a thickness of 1 um or greater and 5 um or smaller. In such a case, defects caused by fisheyes of the substrate sheet can be suitably repaired, so that the occurrence of voids in the picture pattern of the picture pattern layer can be suitably prevented or reduced. The picture auxiliary layer more preferably has a thickness of 1.5 um or greater and 3 um or smaller.

(Picture pattern layer)

The decorative sheet includes a picture pattern layer for constituting the picture pattern, laminated adjacent to the first face side of the substrate sheet.

The picture pattern layer is for providing a desired picture pattern (design) to the decorative sheet. The type of the picture pattern is not limited. Examples thereof include wood-grain patterns, stone-grain patterns, sand-grain patterns, tiled patterns, brick-masonry patterns, fabric patterns, tie-dyed patterns, geometric patterns, letters, symbols, and abstract patterns.

The ink used in formation of the picture pattern layer contains a colorant component, a resin component, and a liquid component. The ink may be prepared by appropriately mixing an extender pigment, a solvent, a stabilizer, a plasticizer, a catalyst, a curing agent, or the like.

Usable as the colorant component are, for example: inorganic pigments such as carbon black (Chinese ink), iron black, titanium white, antimony white, chrome yellow, titanium yellow, red iron oxide, cadmium red, ultramarine, and cobalt blue; organic pigments or dyes such as quinacridone red, iso-indolinone yellow, and phthalocyanine blue; metal pigments formed of foil flakes of aluminum, brass, and the like; and pearl-like luster pigments (pearl pigments) formed of foil flakes of titanium dioxide-coated mica, basic lead carbonate, and the like. Any resin component may be used. Usable is any one or a combination of two or more selected from urethane resins, acrylic resins, ester resins, amide resins, butyral resins, styrene resins, nitrocellulose resins, cellulose acetate resins, acrylic-urethane resins, vinyl chloride-vinyl acetate copolymer resins, vinyl chloride-vinyl acetate-acrylic copolymer resins, and chlorinated polypropylene resins. An organic solvent such as methyl ethyl ketone, toluene, cyclohexanone, an ethyl acetate-alcohol mixture, ethanol, or methanol, or water is usable as the liquid component.

The picture pattern layer for constituting a picture pattern can be formed by partial printing on the picture auxiliary layer by a gravure printing method using an ink containing a colorant component, a resin component, and a liquid component and a gravure roll. The picture pattern layer may be formed by performing partial printing multiple times using inks of the same or different compositions in different areas and/or repeatedly in the same area.

The picture pattern layer preferably has a thickness of 0.1 um or greater and 5 um or smaller. With a thickness within such a range, the picture pattern layer can have favorable film quality and adhesiveness.

The picture pattern layer more preferably has a thickness of 0.5 um or greater and 3 um or smaller.

(Back-side adhesion auxiliary layer)

The decorative sheet may include a back-side adhesion auxiliary layer laminated on the second face side of the substrate sheet and entirely covering the second face of the substrate sheet. Owing to the presence of such a back-side adhesion auxiliary layer, fisheyes on the second face side of the substrate sheet can be repaired, thereby preventing or reducing adhesion failure to adherends. The back-side adhesion auxiliary layer only needs to uniformly cover the entire second face and does not need to completely cover the whole surface of the second face. The back-side adhesion auxiliary layer may have, for example, minute defects such as pinholes that are inevitably formed during formation of the back-side adhesion auxiliary layer.

The back-side adhesion auxiliary layer entirely covering the second face of the substrate sheet can be formed through solid printing by a gravure printing method using a gravure roll. The ink used in formation of the back-side adhesion auxiliary layer contains a resin component and a liquid component. The ink may be prepared by appropriately mixing a colorant such as a pigment and a dye, an extender pigment, a stabilizer, a plasticizer, a catalyst, a curing agent, or the like.

Examples of usable resin components include urethane resins, acrylic resins, ester resins, amide resins, butyral resins, styrene resins, urethane-acrylic copolymers, polycarbonate acrylic-urethane copolymers (urethane-acrylic copolymers derived from a polymer (polycarbonate polyol) having a carbonate bond in the polymer main chain and two or more hydroxy groups at an end and in a side chain), vinyl chloride-vinyl acetate copolymer resins, vinyl chloride-vinyl acetate-acrylic copolymer resins, chlorinated polypropylene resins, nitro cellulose resins, and cellulose acetate resins. An organic solvent such as methyl ethyl ketone, toluene, cyclohexanone, an ethyl acetate-alcohol mixture, ethanol, or methanol, or water is usable as the liquid component.

In order to improve the adhesiveness to adherends, the back-side adhesion auxiliary layer preferably contains a urethane resin and the urethane resin is more preferably an ester polyurethane.

The ester polyurethane is a cured product of a composition containing a polyol (polyhydric alcohol) as a main component and an isocyanate as a crosslinking agent (curing agent).

The polyol has two or more hydroxy groups in the molecule. Examples of usable polyols include polyethylene glycol, polypropylene glycol, acrylic polyol, polyester polyol, and polyether polyol.

The isocyanate used is a polyvalent isocyanate having two or more isocyanate groups in the molecule. Examples of usable isocyanates include aromatic isocyanates such as 2-4 tolylene diisocyanate, xylene diisocyanate, and 4-4 diphenylmethane diisocyanate and aliphatic (or alicyclic) isocyanates such as hexamethylene diisocyanate, isophorone diisocyanate, hydrogenated tolylene diisocyanate, and hydrogenated diphenylmethane diisocyanate.

In order to suitably improve the adhesiveness of the back-side adhesion auxiliary layer to adherends, the amount of the resin component is more preferably 40% by mass or more, still more preferably 50% by mass or more based on the mass of the back-side adhesion auxiliary layer.

In order to improve the dryability, the back-side adhesion auxiliary layer preferably contains nitrocellulose (in an amount of more than 0% by mass). In order to prevent or reduce discoloration of the decorative sheet prepared using biomass-derived polyethylene, the amount of nitrocellulose is preferably 5% by mass or less. The amount of the nitrocellulose is more preferably 3% by mass or less, still more preferably 1% by mass or less based on the mass of the back-side adhesion auxiliary layer.

The back-side adhesion auxiliary layer is preferably smoothed using a smoothing roll after solid printing using a gravure roll. Alternatively, the back-side adhesion auxiliary layer is preferably smoothed by setting the conveying speed of the substrate sheet and the circumferential rotational speed of the gravure roll at different speeds. The smoothing enables formation of more homogeneous back-side adhesion auxiliary layer.

The back-side adhesion auxiliary layer preferably has a thickness of 1 um or greater and 10 um or smaller. In such a case, defects caused by fisheyes of the substrate sheet can be suitably repaired, so that adhesion failure to adherends can be suitably prevented or reduced.

The back-side adhesion auxiliary layer more preferably has a thickness of 1.5 um or greater and 5 um or smaller.

(Transparent resin layer)

The decorative sheet preferably includes a transparent resin layer laminated on a side of the picture pattern layer opposite to the side with the picture auxiliary layer.

The transparent resin layer protects the picture pattern layer and improves the scratch resistance of the decorative sheet, thereby imparting durability to the decorative sheet.

The term "transparent" covers "semi-transparent" or "colored transparent" as long as the picture pattern layer is visible.

The transparent resin layer may be formed using, for example, an ester resin or an olefin resin, an acrylic resin, a carbonate resin, a urethane resin, a styrene resin, a vinyl chloride resin, a vinyl acetate resin, or a vinyl chloride-vinyl acetate copolymer resin. In order to improve moldability and to improve scratch resistance, preferred are an ester resin and an olefin resin, and more preferred is an olefin resin such as polypropylene and polyester.

In order to impart durability more suitably, the transparent resin layer preferably contains an ultraviolet absorber and a light stabilizer. Examples of ultraviolet absorbers include benzotriazole ultraviolet absorbers, benzophenone ultraviolet absorbers, salicylic acid ester ultraviolet absorbers, and triazine ultraviolet absorbers. In order to impart weather resistance, design, and bleeding control suitably, preferred is a triazine ultraviolet absorber. The amount of the ultraviolet absorber is preferably 0.1% by mass or more and 1% by mass or less based on the mass of the transparent resin layer.

A hindered amine light stabilizer is suitably usable as the light stabilizer.

The amount of the light stabilizer is preferably 1.5% by mass or more and 3% by mass or less based on the mass of the transparent resin layer.

The transparent resin layer may further contain various additives, if needed. Examples of additives include lubricants such as silicone resin, wax, and fluororesin, and colorants such as a dye or a pigment.

The transparent resin layer has a thickness of 40 um or greater and 100 um or smaller.

When the transparent resin layer has a thickness within the above range, the amount of fossil fuel-derived polyethylene in the decorative sheet can be suitably reduced as a whole, leading to suitable reduction of environmental impact.

The transparent resin layer preferably has a thickness of 50 um or greater and 80 um or smaller.

The transparent resin layer may be laminated by any common method. Examples thereof include a dry lamination method and an extrusion lamination method in which molten resin is extruded and laminated using a T-die.

A T-die capable of extruding molten resin can be used as the extrusion mechanism described above.

The transparent resin layer may be subjected to surface treatment such as saponification treatment, glow discharge treatment, corona discharge treatment, plasma discharge treatment, ultraviolet (UV) treatment, or flame treatment.

(Surface protective layer)

The decorative sheet may include a surface protective layer on a side of the transparent resin layer opposite to the side with the picture pattern layer.

The Surface protective layer can impart durability (scratch resistance, contamination resistance, weather resistance, etc.).

The surface protective layer may contain as a main component, for example, a cured product of a thermosetting component or a cured product of an ionizing radiation-curable component. The cured product is preferably transparent. The surface protective layer preferably contains an ultraviolet absorber and a light stabilizer. The ultraviolet absorber and the light stabilizer may be the same as those for the transparent resin layer.

The cured product of a thermosetting component may be a cured product of, for example, an ester urethane or an acrylic urethane.

The cured product of the ionizing radiation-curable resin may be a cured product of an oligomer having a radical polymerizable unsaturated bond or a cationic polymerizable functional group in the molecule and/or a monomer having a radical polymerizable unsaturated bond or a cationic polymerizable functional group in the molecule. The term "ionizing radiation" refers to an electromagnetic wave or charged particle having energy capable of polymerizing or crosslinking molecules. The ionizing radiation is typically an electron beam (EB) or ultraviolet light (UV). The surface protective layer may be formed by any known method.

The oligomer having a radical polymerizable unsaturated group in the molecule is preferably, for example, an oligomer of urethane (meth)acrylate, polyester (meth)acrylate, epoxy (meth)acrylate, melamine (meth)acrylate, or triazine (meth)acrylate, more preferably a urethane (meth)acrylate oligomer. An oligomer having a molecular weight of about 250 or more and 100000 or less is typically used.

The monomer having a radical polymerizable unsaturated group in the molecule is preferably, for example, a polyfunctional monomer, more preferably a polyfunctional (meth)acrylate.

Examples of the polyfunctional (meth)acrylate include diethylene glycol di(meth)acrylate, propylene glycol di(meth)acrylate, bisphenol A ethylene oxide-modified di(meth)acrylate, trimethyrolpropane tri(meth)acrylate, trimethyrolpropane ethylene oxide tri(meth)acrylate, dipentaerythritol tetra(meth)acrylate, dipentaerythritol penta(meth)acrylate (pentafunctional (meth)acrylate), and dipentaerythritol hexa(meth)acrylate (hexafunctional (meth)acrylate). If needed, a monofunctional monomer may be appropriately used.

The ionizing radiation-curable resin component preferably contains a urethane acrylate oligomer and a polyfunctional monomer at a mass ratio (urethane acrylate oligomer/polyfunctional monomer) of 6/4 or higher 9/1 or lower.

In the case where ultraviolet light is used for crosslinking of the ionizing radiation-curable resin composition, a photopolymerization initiator is preferably used. The amount of the photopolymerization initiator is, for example, about 0.1 to 10 parts by mass per 100 parts by mass of the ionizing radiation-curable component.

The surface protective layer preferably has a gloss-matte effect. Even when fisheyes caused the occurrence of voids in the picture pattern constituted by the picture pattern layer, such a surface protective layer can make them less noticeable.

The gloss-matte effect refers to a design effect where glossy areas appear raised and matte areas appear depressed.

The gloss-matte effect may be imparted by any method. The surface protective layer may contain a gloss modifier or may have surface irregularities to achieve the gloss-matter effect. The surface irregularities may have a maximum height Rz of, for example, 10 um or more and 60 um or less. The picture pattern constituted by the gloss-matte effect of the surface protective layer may or may not synchronize with all or part of the picture pattern constituted by the picture pattern layer. Preferred is an unsynchronized picture pattern because it can make voids less noticeable even when fisheyes caused the occurrence of voids in the picture pattern constituted by the picture pattern layer.

The surface protective layer may have any thickness. The thickness may be, for example, 1 um or greater and 50 um or smaller. When the surface protective layer has a thickness of smaller than 1 um, sufficient durability (e.g., scratch resistance, contamination resistance, weather resistance) may not be imparted. When the surface protective layer has a thickness of greater than 50 um, the surface protective layer may have a lower transmittance, resulting in lower visibility of the picture of the picture pattern layer. The surface protective layer may have a thickness of 3 um or greater and 40 um or smaller or 5 um or greater and 35 um or smaller.

(Adhesive layer)

The decorative sheet may include an adhesive layer between the picture pattern layer and the transparent resin layer. The adhesive layer is preferably transparent. Examples of the adhesive used for the adhesive layer include urethane adhesives such as an ester urethane or an acrylic urethane, acrylic adhesives, epoxy adhesives, and rubber adhesives. The adhesive layer has a thickness of, for example, 0.1 um or greater and 30 um or smaller.

(Front-side adhesion auxiliary layer)

The decorative sheet may include a front-side adhesion auxiliary layer between the transparent resin layer and the surface protective layer. The front-side adhesion auxiliary layer may function as a primer layer or an easy adhesion layer for the surface protective layer. The front-side adhesion auxiliary layer is preferably transparent. Examples of the adhesive used for the front-side adhesion auxiliary layer include urethane adhesives such as an ester urethane or an acrylic urethane, acrylic adhesives, epoxy adhesives, and rubber adhesives. The front-side adhesion auxiliary layer preferably contains an ultraviolet absorber and a light stabilizer. The ultraviolet absorber and the light stabilizer may be the same as those for the transparent resin layer. The front-side adhesion auxiliary layer has a thickness of, for example, 0.1 um or greater and 30 um or smaller.

(Method for producing decorative sheet)

In a method for producing the decorative sheet of the present disclosure, the sequence of the steps is not important. For example, the decorative sheet may be produced in the order of the picture auxiliary layer, the back-side adhesion auxiliary layer, and the picture pattern layer, in the order of the picture auxiliary layer, the picture pattern layer, and the back-side adhesion auxiliary layer, or in the order of the back-side adhesion auxiliary layer, the picture auxiliary layer, and the picture pattern layer. It is not necessary to carry out these steps consecutively, and different step(s) or treatment(s) may be carried out in between.

<Decorative panel>

The decorative panel of the present disclosure includes a decorative sheet prepared using biomass-derived polyethylene and an adherend laminated adjacent to the second face side of the substrate sheet in the decorative sheet.
Examples of the adherend include wooden boards, plaster boards, cement boards, ceramic boards, metal boards, resin boards, and fiber-reinforced plastic boards. The adherend may be laminated, for example, by laminating it adjacent to the second face side of the substrate sheet with an adhesive.
The following items are disclosed herein.
The present disclosure (1) relates to a decorative sheet prepared using biomass-derived polyethylene, including: a substrate sheet that contains biomass-derived polyethylene and has a first face and a second face; a picture auxiliary layer for constituting a picture pattern, laminated on a first face side of the substrate sheet and entirely covering the first face of the substrate sheet; and a picture pattern layer for constituting the picture pattern, laminated on a side of the picture auxiliary layer opposite to a side with the substrate sheet, the substrate sheet having a biomass content of 15% or higher and 40% or lower and a thickness of 50 um or greater and smaller than 65 um.
The present disclosure (2) relates to the decorative sheet prepared using biomass-derived polyethylene according to the present disclosure (1), wherein the substrate sheet contains an antioxidant.
The present disclosure (3) relates to the decorative sheet prepared using biomass-derived polyethylene according to the present disclosure (2), wherein the substrate sheet contains a phenol antioxidant.
The present disclosure (4) relates to the decorative sheet prepared using biomass-derived polyethylene according to the present disclosure (2) or (3), wherein the substrate sheet further contains a phosphorus antioxidant.
The present disclosure (5) relates to the decorative sheet prepared using biomass-derived polyethylene according to any one of the present disclosures (1) to (4), wherein the picture auxiliary layer has a thickness of 1 um or greater and 5 um or smaller.
The present disclosure (6) relates to the decorative sheet prepared using biomass-derived polyethylene according to any one of the present disclosures (1) to (5), wherein the picture auxiliary layer is smoothed.
The present disclosure (7) relates to the decorative sheet prepared using biomass-derived polyethylene according to any one of the present disclosures (1) to (6), wherein the decorative sheet further includes a transparent resin layer laminated on a side of the picture pattern layer opposite to the side with the picture auxiliary layer, and the transparent resin layer has a thickness of 40 um or greater and 100 um or smaller.
The present disclosure (8) relates to the decorative sheet prepared using biomass-derived polyethylene according to the present disclosure (7), wherein the transparent resin layer contains an olefin resin.
The present disclosure (9) relates to a decorative panel including the decorative sheet prepared using biomass-derived polyethylene according to any one of the present disclosures (1) to (8) and an adherend laminated adjacent to a second face side of the substrate sheet in the decorative sheet.

EXAMPLES

In the following, the present invention is more specifically described with reference to examples, but the present disclosure is not intended to be limited only to these examples.

(Example 1)

A biomass-derived polyethylene having a biomass content of 15% (colored polyethylene film with a thickness of 50 um, containing 0.05% by mass of phenol antioxidant (Irganox 1010 available from BASF Japan Ltd.) and 0.05% by mass of phosphorus antioxidant (Irgafos 168 available from BASF Japan Ltd.)) was provided as a substrate sheet.
A back-side adhesion auxiliary layer (containing 53% by mass of ester polyurethane resin and 3% by mass of nitrocellulose) was formed on one side of the substrate sheet, covering the entire surface through solid printing using an ink containing an organic solvent by a gravure printing method using a gravure roll.
A picture auxiliary layer with a thickness of 2 um containing, as a main component, an acrylic-urethane resin was formed on the other side of the substrate sheet, covering the entire surface through solid printing using an ink containing an organic solvent by a gravure printing method using a gravure roll. Then, a picture pattern layer (wood-grain pattern) with a thickness of 2 um containing, as a main component, an acrylic-urethane resin was formed thereon through partial printing using an ink containing a colorant and an organic solvent by a gravure printing method using a gravure roll.
An ester polyurethane was applied to the side of the picture pattern layer opposite to the side with the picture auxiliary layer, thereby forming an adhesive layer with a thickness of 10 um. A transparent olefin sheet with a thickness of 60 um was dry-laminated on the adhesive layer, thereby forming a transparent resin layer.
A front-side adhesion auxiliary layer containing an acrylic-urethane copolymer resin with a thickness of 2 um was formed on the side of the transparent resin layer opposite to the side with the adhesive layer. A coating agent (urethane-acrylate ionizing radiation curable resin composition) was applied to the front-side adhesion auxiliary layer by gravure coating. The coating agent was exposed to ionizing radiation to be cured, whereby a surface protective layer with a thickness of 5 um was formed.
Finally, the resulting product was embossed from the side with the surface protective layer to form surface irregularities, whereby a decorative sheet was produced.

(Examples 2 to 6, Comparative Example 1)

A decorative sheet was produced as in Example 1, except that the biomass content and the thickness of the substrate sheet were changed as shown in Table 1.

<Evaluation method>

(Voids in picture pattern)

For the decorative sheets prepared using biomass-derived polyethylene in the examples and the comparative example, whether or not the picture of the picture pattern layer has voids (whether or not voids are found in the picture pattern) was visually checked from a distance of 50 cm away from the decorative sheet under a light source of 500 lux or higher, and evaluated based on the following criteria. Table 1 shows the results.

++: No voids were found in the picture pattern from the position 10 cm apart from the decorative sheet
+: No voids were found in the picture pattern from the position 50 cm apart from the decorative sheet but voids were found in the picture pattern from the position 10 cm apart from the decorative sheet
-: Voids were found in the picture pattern from the position 50 cm apart from the decorative sheet

[Table 1]

|  | Example 1 | Example 2 | Example 3 | Example 4 | Example 5 | Example 6 | Comparative Example 1 |
|---|---|---|---|---|---|---|---|
| Biomass content of substrate sheet (%) | 15 | 35 | 40 | 35 | 40 | 40 | 68 |
| Thickness of substrate sheet (μm) | 50 | 50 | 50 | 55 | 55 | 60 | 65 |

(continued)

| | | Example 1 | Example 2 | Example 3 | Example 4 | Example 5 | Example 6 | Comparative Example 1 |
|---|---|---|---|---|---|---|---|---|
| Evaluation method | Voids in picture pattern | ++ | ++ | + | ++ | + | ++ | - |

According to the examples, it is confirmed that the occurence of voids in the picture pattern due to defects caused by fisheyes of the substrate sheet can be prevented or reduced when the decorative sheet includes a substrate sheet that contains biomass-derived polyethylene; a picture auxiliary layer for constituting a picture pattern, laminated on the first face side of the substrate sheet and entirely covering the first face of the substrate sheet; and a picture pattern layer, laminated on a side of the picture auxiliary layer opposite to the side with the substrate sheet, and the substrate sheet has a biomass content and a thickness each within a predetermined range.

In contrast, in Comparative Example 1, the decorative sheet had insufficient flexibility because the substrate sheet was too thick, and the occurrence of voids in the picture pattern caused by fisheyes could not be sufficiently prevented or reduced even with a picture auxiliary layer.

REFERENCE SIGNS LIST

1    substrate sheet
2    picture auxiliary layer
3    picture pattern layer
4    back-side adhesion auxiliary layer
5    adhesive layer
6    transparent resin layer
7    front-side adhesion auxiliary layer
8    surface protective layer
10   decorative sheet prepared using biomass-derived polyethylene

**Claims**

1.  A decorative sheet prepared using biomass-derived polyethylene, comprising:

    a substrate sheet that contains biomass-derived polyethylene and has a first face and a second face;
    a picture auxiliary layer for constituting a picture pattern, laminated on a first face side of the substrate sheet and entirely covering the first face of the substrate sheet; and
    a picture pattern layer for constituting the picture pattern, laminated on a side of the picture auxiliary layer opposite to a side with the substrate sheet,
    the substrate sheet having a biomass content of 15% or higher and 40% or lower and a thickness of 50 um or greater and smaller than 65 um.

2.  The decorative sheet prepared using biomass-derived polyethylene according to claim 1,
    wherein the substrate sheet contains an antioxidant.

3.  The decorative sheet prepared using biomass-derived polyethylene according to claim 2,
    wherein the substrate sheet contains a phenol antioxidant.

4.  The decorative sheet prepared using biomass-derived polyethylene according to claim 3,
    wherein the substrate sheet further contains a phosphorus antioxidant.

5.  The decorative sheet prepared using biomass-derived polyethylene according to claim 1 or 2,
    wherein the picture auxiliary layer has a thickness of 1 um or greater and 5 $\mu$m or smaller.

6. The decorative sheet prepared using biomass-derived polyethylene according to claim 1 or 2, wherein the picture auxiliary layer is smoothed.

7. The decorative sheet prepared using biomass-derived polyethylene according to claim 1 or 2,

   wherein the decorative sheet further comprises a transparent resin layer laminated on a side of the picture pattern layer opposite to a side with the picture auxiliary layer, and
   the transparent resin layer has a thickness of 40 μm or greater and 100 μm or smaller.

8. The decorative sheet prepared using biomass-derived polyethylene according to claim 7, wherein the transparent resin layer comprises an olefin resin.

9. A decorative panel comprising:

   the decorative sheet prepared using biomass-derived polyethylene according to claim 1 or 2; and
   an adherend laminated adjacent to a second face side of the substrate sheet in the decorative sheet.

FIG. 1

10

FIG. 2

10

| INTERNATIONAL SEARCH REPORT | International application No. |
|---|---|
| | **PCT/JP2022/044305** |

**A. CLASSIFICATION OF SUBJECT MATTER**

*B32B 27/00*(2006.01)i; *B32B 27/32*(2006.01)i
FI: B32B27/32 Z; B32B27/00 E

According to International Patent Classification (IPC) or to both national classification and IPC

**B. FIELDS SEARCHED**

Minimum documentation searched (classification system followed by classification symbols)

B32B27/00; B32B27/32

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2020-179553 A (TOPPAN PRINTING CO LTD) 05 November 2020 (2020-11-05) claims, paragraphs [0008], [0019]-[0030], example 1, fig. 1 | 1-9 |
| Y | JP 2017-193722 A (DAINIPPON PRINTING CO LTD) 26 October 2017 (2017-10-26) claims, paragraphs [0007]-[0008], [0022], [0064], examples | 1-9 |
| Y | JP 2010-234766 A (DAINIPPON PRINTING CO LTD) 21 October 2010 (2010-10-21) claims, paragraphs [0017], [0033], fig. 1 | 1-9 |
| Y | JP 2010-52308 A (TOPPAN COSMO INC) 11 March 2010 (2010-03-11) claims, paragraphs [0018]-[0021] | 2-9 |

☐ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 January 2023** | **07 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/044305**

| Patent document cited in search report | | | Publication date (day/month/year) | Patent family member(s) | Publication date (day/month/year) |
|---|---|---|---|---|---|
| JP | 2020-179553 | A | 05 November 2020 | (Family: none) | |
| JP | 2017-193722 | A | 26 October 2017 | (Family: none) | |
| JP | 2010-234766 | A | 21 October 2010 | (Family: none) | |
| JP | 2010-52308 | A | 11 March 2010 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013063635 A